# NEUE EUROPÄISCHE PATENTSCHRIFT

(11) **EP 3 515 775 B2**
(45) Veröffentlichungstag und Bekanntmachung des Hinweises auf die Entscheidung über den Einspruch: **17.04.2024**
(45) Hinweis auf die Patenterteilung: 07.04.2021
(21) Anmeldenummer: 17755521.6
(22) Anmeldetag: 23.08.2017
(51) Int. Cl.: B60T 15/48, B60T 17/02, B60T 17/06

(54) **DRUCKLUFTANLAGENSYSTEM FÜR EIN FAHRZEUG UND VERFAHREN ZUM BETREIBEN EINER DRUCKLUFTANLAGE EINES FAHRZEUGS**
COMPRESSED AIR SYSTEM FOR A VEHICLE AND METHOD FOR USING A COMPRESSED AIR SYSTEM OF A VEHICLE
SYSTÈME D'AIR COMPRIMÉ POUR UN VÉHICULE ET MÉTHODE POUR L'UTILISATION D'UN SYSTÈME D'AIR COMPRIMÉ D'UN VÉHICULE

(30) Priorität: 21.09.2016 DE 102016117781
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: LEINUNG, Andreas, 81245 München (DE)
(74) Vertreter: Prüfer & Partner mbB Patentanwälte · Rechtsanwälte
(86) Internationale Anmeldenummer: PCT/EP2017/071265
(87) Internationale Veröffentlichungsnummer: WO 2018/054642

(56) Entgegenhaltungen:
- EP-A1- 1 504 975
- EP-B1- 2 492 118
- EP-B1- 2 570 316
- WO-A1-02/12042
- WO-A1-2009/043405
- WO-A1-2010/051868
- WO-A1-2011/039559
- DE-A1- 3 709 797
- DE-A1- 10 125 204
- DE-A1- 10 252 975
- DE-A1- 19 515 895
- DE-A1- 19 905 172
- DE-A1-102006 043 607
- DE-A1-102008 006 860
- DE-A1-102015 003 181
- DE-B4- 10 314 643
- DE-B4-102004 051 309
- DE-T5-112012 003 892
- DE-U1- 29 907 137
- JP-A- H07 267 077
- US-A- 4 549 888
- US-A- 4 549 888
- JP H07267077 A Maschinenübersetzung
- ACCUAIR SUSPENSION, ?E-Level Controller W/Touchpad?
- ACCUAIR SUSPENSION. ?Installation Manual"
- ACCUAIR SUSPENSION, "Operation Manuel"]
- ACCUAIR SUSPESION, "Data Sheet"
- ACCUAIR SUSPENSION, ?VALVE?
- ACCUAIR SUSPENSION, "FOBS"
- ACCUAIR SUSPENSION, "Receiver?
- ACCUAIR SUSPENSION. "Screenshot"

## Beschreibung

Die Erfindung betrifft ein Druckluftanlagensystem für ein Fahrzeug, insbesondere für ein Nutzfahrzeug, sowie Verfahren zum Betreiben einer Druckluftanlage eines Fahrzeugs, insbesondere eines Nutzfahrzeugs.

Beim Starten eines herkömmlichen Nutzfahrzeugs werden nach längerer Standzeit in der Regel einige Minuten Wartezeit benötigt bis die Druckluftanlage des Nutzfahrzeugs betriebsbereit ist. Der Fahrer darf insbesondere mit dem Nutzfahrzeug erst fahren, wenn die Druckluftspeicher der Bremsanlage ausreichend mit Druckluft gefüllt sind. Das Befüllen einer komplett oder zum Teil entleerten Druckluftbremsanlage benötigt aber eine gewisse Zeitdauer. Es ist in diesem Zusammenhang bekannt, nach dem Starten des Motors eine erhöhte Motordrehzahl und damit auch eine erhöhte Kompressordrehzahl anzufordern, um die Befüllungsdauer der Druckluftbremsanlage durch eine erhöhte Druckluft-Förderleistung des Kompressors zu verkürzen.

In Dokument DE 299 07 137 U1 ist ein externes Bremsdruckaufladesystem für Feuerwehreinsatzfahrzeuge offenbart. Das Bremsdruckaufladesystem füllt Druckluft aus einer Atemluftflasche über einen Druckminderer, gegebenenfalls über eine Steuerelektronik gesteuert, in ein Bremsluftsystem eines Feuerwehreinsatzfahrzeugs.

Es ist die Aufgabe der Erfindung, ein verbessertes Druckluftanlagensystem und ein verbessertes Verfahren zum Betreiben einer Druckluftanlage eines Fahrzeugs zu schaffen, mit denen Wartezeiten nach dem Starten des Fahrzeugs bis zum Losfahren verkürzt werden können.

Diese Aufgabe wird gelöst durch die Lehre der unabhängigen Ansprüche. Besonders vorteilhafte Ausgestaltungen der Erfindung sind Gegenstand der abhängigen Ansprüche.

Gemäß einem Aspekt der Erfindung weist das erfindungsgemäße Druckluftanlagensystem für ein Fahrzeug auf: eine Druckluftanlage und eine Steuervorrichtung zum Steuern der Druckluftanlage, die ausgestaltet ist, um einen Konditioniervorgang auszuführen, mit dem die Druckluftanlage vor einem Fahrbeginn des Fahrzeugs in einen betriebsbereiten Zustand versetzt wird.

Gemäß der Erfindung wird vorgeschlagen, die Druckluftanlage des Fahrzeugs bereits vor dem Fahrbeginn des Fahrzeugs automatisch in einen betriebsbereiten Zustand zu versetzen. Auf diese Weise können Wartezeiten nach dem Starten des Fahrzeugs bis zum Losfahren des Fahrzeugs vermieden oder zumindest verkürzt werden. Auch ist für den Konditioniervorgang die Anwesenheit des Fahrers nicht zwingend erforderlich. Der Begriff "vor dem Fahrbeginn" soll in diesem Zusammenhang alle Zeiträume und Betriebszustände des Fahrzeugs umfassen, bevor ein Fahrer des Fahrzeugs mit dem Fahrzeug losfährt, insbesondere bevor ein Fahrer das Fahrzeug bzw. den Fahrzeugmotor mit dem Ziel des Losfahrens startet. Der Konditioniervorgang umfasst das Betätigen einer Parkbremse.

Bei dem Fahrzeug handelt es sich vorzugsweise um ein Nutzfahrzeug. Die Druckluftanlage enthält vorzugsweise eine Druckluftbremsanlage und/oder eine Luftfederung.

Das Versetzen der Druckluftanlage in einen betriebsbereiten Zustand soll in diesem Zusammenhang das Versetzen der gesamten Druckluftanlage oder zumindest einzelner Komponenten der Druckluftanlage (z.B. Druckluftspeicher, Luftfilter, Lufttrocknerpatronen, etc.) in einen betriebsbereiten Zustand umfassen. Unter einem betriebsbereiten Zustand der Druckluftanlage bzw. einer Druckluftanlagenkomponente soll in diesem Zusammenhang ein Zustand verstanden werden, in dem ein Fahren des Fahrzeugs möglich und zulässig ist.

Der Konditioniervorgang enthält vorzugsweise wenigstens ferner eine Maßnahme, die ausgewählt ist aus einem Befüllen wenigstens eines Druckluftspeichers der Druckluftanlage mit Druckluft, einem Regenerieren einer Druckluftaufbereitungseinrichtung der Druckluftanlage (z.B. aufweisend eine regenerierbare Lufttrocknerpatrone und/oder einen regenerierbaren Luftfilter), einem Aufladen einer Batterie, einem selektiven Befüllen von Luftverbraucherkreisen, die mit der Druckluftanlage verbunden sind, , einem Starten eines Motors des Fahrzeugs (mit einem Motorbetrieb z.B. während der Dauer des Konditioniervorgangs oder bis zum Fahrbeginn des Fahrzeugs), einem Abschalten insbesondere von viel Energie verbrauchenden Komponenten zum Abschluss des Konditioniervorgangs, einem Anheben einer Luftfederung auf ein vorbestimmtes Niveau, einem Optimieren einer Lüftspieleinstellung zwischen Bremsbelägen und Bremsscheiben und dergleichen. Das Betätigen der (bevorzugt elektrisch steuerbaren) Parkbremse erfolgt vorzugsweise zu Beginn, im Laufe oder zum Abschluss des Konditioniervorgangs.

In einer vorteilhaften Ausgestaltung der Erfindung ist ein Signalgenerator vorgesehen, der bei Vorliegen einer bestimmten Bedingung (sofort oder mit einem vorbestimmten Zeitverzug) ein Steuersignal zum Auslösen des Konditioniervorgangs erzeugt.

Das Steuersignal ist vorzugsweise ein Triggersignal zum sofortigen Auslösen des Konditioniervorgangs oder ein Zeitsignal (z.B. Uhrzeit oder Zeitdauer) zum Auslösen des Konditioniervorgangs zu einem gewünschten Zeitpunkt in der Zukunft. Im Fall einer Uhrzeit als Zeitsignal kann diese ein einmaliges Auslösen des Konditioniervorgangs oder ein wiederholtes (z.B. täglich, werktäglich, wöchentlich) Auslösen des Konditioniervorgangs bewirken.

In einer vorteilhaften Ausgestaltung der Erfindung ist der Signalgenerator derart ausgestaltet, dass er das Steuersignal in Abhängigkeit von einer Bedienung durch einen Benutzer erzeugt. In anderen vorteilhaften Ausgestaltungen kann der Signalgenerator das Steuersignal auch automatisch, d.h. ohne die Notwendigkeit irgendeiner Bedienung durch einen Benutzer erzeugen.

In einer vorteilhaften Ausgestaltung der Erfindung ist der Signalgenerator separat von der Steuervorrichtung vorgesehen. Das von dem Signalgenerator erzeugte Steuersignal zum Auslösen des Konditioniervorgangs sendet dieser dann an die Steuervorrichtung. In anderen vorteilhaften Ausgestaltungen kann der Signalgenerator auch in die Steuervorrichtung integriert sein.

In einer vorteilhaften Ausgestaltung der Erfindung ist der Signalgenerator in ein Mobilgerät integriert oder mit einem Mobilgerät verbunden. Bei dem Mobilgerät handelt es sich vorzugsweise um ein Mobiltelefon, ein Smartphone, einen Tabletcomputer, einen Fahrzeugschlüssel, ein mobiles Navigationsgerät, ein PDA (Personal Digital Assistant) oder dergleichen.

In einer vorteilhaften Ausgestaltung der Erfindung ist dieses Mobilgerät über eine Drahtlosverbindung, bevorzugt eine Funkverbindung (z.B. WLAN, Wifi, Bluetooth, etc.), oder ein Telekommunikationsnetz mit der Steuervorrichtung oder mit einem Fahrzeugbus, an den die Steuervorrichtung angeschlossen ist, verbindbar. Das Mobilgerät einerseits und die Steuervorrichtung bzw. der Fahrzeugbus andererseits verfügen zu diesem Zweck über geeignete (Drahtlos-)Kommunikationsschnittstellen.

In einer vorteilhaften Ausgestaltung der Erfindung weist der Signalgenerator eine Eingabevorrichtung (z.B. Touchscreen eines Smartphones, etc.) zum Eingeben eines Steuerbefehls entsprechend dem zu erzeugenden Steuersignal durch einen Benutzer und/oder eine Lokalisierungsvorrichtung (z.B. GPS-Sensor) zum Ermitteln einer Position des Mobilgeräts und automatischen Erzeugen des Steuersignals entsprechend der ermittelten Position auf. Je nach Ausführungsform kann der Benutzer so zum Beispiel über die Eingabevorrichtung zu einem gewünschten Zeitpunkt einen Steuerbefehl zum Erzeugen eines entsprechenden Steuersignals eingeben, damit die Druckluftanlage zu einem gewünschten Zeitpunkt vorkonditioniert wird. Alternativ oder zusätzlich kann mittels der Lokalisierungsvorrichtung automatisch ein Steuersignal zum Auslösen des Konditioniervorgangs erzeugt werden, wenn sich zum Beispiel der Benutzer dem Fahrzeug nähert.

In einer anderen vorteilhaften Ausgestaltung der Erfindung ist das Mobilgerät an eine Kommunikationsschnittstelle (z.B. USB-Schnittstelle, etc.) eines Fahrzeugbusses, an den die Steuervorrichtung angeschlossen ist, anschließbar.

In einer anderen vorteilhaften Ausgestaltung der Erfindung kann der Signalgenerator eine Eingabevorrichtung aufweisen, die in dem Fahrzeug (fest) installiert ist und vorzugsweise mit dem Fahrzeugbus gekoppelt ist.

In einer weiteren vorteilhaften Ausgestaltung der Erfindung weist der Signalgenerator zudem eine Authentifizierungsvorrichtung auf oder ist mit einer Authentifizierungsvorrichtung verbunden, wobei die Authentifizierungsvorrichtung ausgestaltet ist, um ein Authentifizierungssignal zu erzeugen, das an die Steuervorrichtung gesendet wird. Bei dem Authentifizierungssignal kann es sich zum Beispiel um ein Signal zusätzlich zum Steuersignal oder um eine Codierung des Steuersignals selbst handeln. Dieses Authentifizierungssignal enthält vorzugsweise eine Identifizierung des Benutzers, des Signalgenerators, des Mobilgeräts oder dergleichen, welche von der Steuervorrichtung authentifiziert werden kann. Auf diese Weise kann sichergestellt werden, dass der Konditioniervorgang vor dem Fahrbeginn des Fahrzeugs nur durch berechtigte Benutzer initiiert werden kann.

In einer noch weiteren vorteilhaften Ausgestaltung der Erfindung umfasst der Konditioniervorgang eine Fehlerdiagnose der Druckluftanlage und ist die Steuervorrichtung dann ausgestaltet, ein Fehlerdiagnoseergebnis an eine Anzeigevorrichtung für einen Benutzer auszugeben. Bei der Anzeigevorrichtung handelt es sich zum Beispiel um ein Display eines Smartphones oder Tablet-Computers, einen Monitor oder dergleichen.

In einer noch weiteren vorteilhaften Ausgestaltung der Erfindung ist die Steuervorrichtung eine Steuerelektronik einer Druckluftaufbereitungseinrichtung der Druckluftanlage.

Gegenstand der Erfindung ist auch ein Fahrzeug, das ein oben beschriebenes Druckluftanlagensystem der Erfindung aufweist. Bei dem Fahrzeug handelt es sich vorzugsweise um ein Nutzfahrzeug.

Bei dem erfindungsgemäßen Verfahren zum Betreiben einer Druckluftanlage eines Fahrzeugs wird die Druckluftanlage vor einem Fahrbeginn des Fahrzeugs mittels eines Konditioniervorgangs in einen betriebsbereiten Zustand versetzt. Der Konditioniervorgang umfasst das Betätigen einer Parkbremse.

Mit diesem Verfahren lassen sich die gleichen Vorteile erzielen, die oben in Zusammenhang mit dem erfindungsgemäßen Druckluftanlagensystem erläutert wurden. Bezüglich der verschiedenen Vorteile, Definitionen und vorteilhaften Ausgestaltungen wird deshalb hier ergänzend auf die obigen Ausführungen zum Druckluftanlagensystem der Erfindung verwiesen.

In einer vorteilhaften Ausgestaltung der Erfindung wird der Konditioniervorgang durch ein Steuersignal ausgelöst, das bei Vorliegen einer bestimmten Bedingung (sofort oder mit einem vorbestimmten Zeitverzug) erzeugt wird. Dieses Steuersignal wird vorzugsweise durch einen Benutzer erzeugt.

Vorzugsweise ist das Steuersignal ein Triggersignal zum sofortigen Auslösen des Konditioniervorgangs oder ein Zeitsignal zum Auslösen des Konditioniervorgangs zu einem gewünschten Zeitpunkt in der Zukunft.

In einer vorteilhaften Ausgestaltung der Erfindung wird das Steuersignal von einem Benutzer über ein Mobilgerät oder eine in dem Fahrzeug installierte Eingabevorrichtung erzeugt.

In einer vorteilhaften Ausgestaltung der Erfindung wird das Auslösen des Konditioniervorgangs mittels eines Authentifizierungssignals authentifiziert.

In einer noch weiteren vorteilhaften Ausgestaltung der Erfindung umfasst der Konditioniervorgang eine Fehlerdiagnose der Druckluftanlage. Das Fehlerdiagnoseergebnis wird dann vorzugsweise an einen Benutzer ausgegeben.

Obige sowie weitere Vorteile, Merkmale und Anwendungsmöglichkeiten der Erfindung werden aus der nachfolgenden Beschreibung bevorzugter Ausführungsbeispiele unter Bezugnahme auf die beiliegende Zeichnung besser verständlich. Darin zeigen, größtenteils schematisch:
- Fig. 1: den Aufbau eines Bremsanlagensystems eines Nutzfahrzeugs gemäß einem Ausführungsbeispiel der Erfindung in einer stark vereinfachten Darstellung; und
- Fig. 2: den Aufbau einer Druckluftbremsanlage eines Nutzfahrzeugs gemäß einem Ausführungsbeispiel der Erfindung in einer detaillierteren Darstellung.

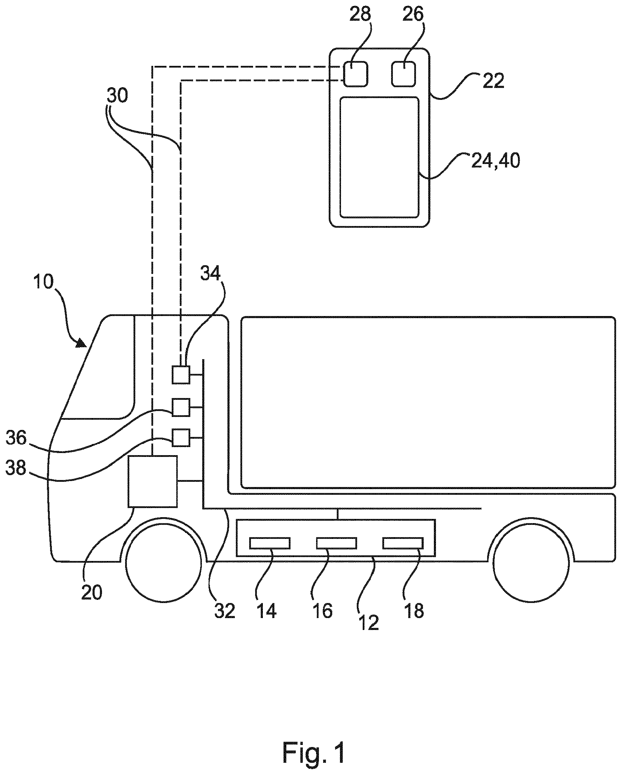

**Fig. 1** zeigt schematisch und stark vereinfacht den Aufbau eines Bremsanlagensystems eines Nutzfahrzeugs als erfindungsgemäßes Beispiel eines Druckluftanlagensystems für ein Fahrzeug. In anderen Anwendungen der Erfindung kann das Druckluftanlagensystem alternativ oder zusätzlich auch eine Luftfederung eines Nutzfahrzeugs enthalten.

Das Nutzfahrzeug 10 enthält eine Druckluftbremsanlage 12, die u.a. einen Kompressor 14, eine Druckluftaufbereitungseinrichtung 16 und mehrere Druckluftspeicher 18 aufweist. Der Kompressor 14 ist bevorzugt ein Elektro-Kompressor, der unabhängig vom Betrieb des Fahrzeugmotors betrieben werden kann. Die Druckluftaufbereitungseinrichtung 16 weist zum Beispiel wenigstens einen Luftfilter und wenigstens eine Lufttrocknerpatrone auf.

Die Druckluftbremsanlage 12 ist über einen Fahrzeugbus 32 mit einer Steuervorrichtung 20 verbunden. Die Steuervorrichtung 20 steuert und überwacht die Druckluftbremsanlage 12. Bei dem Fahrzeugbus 32 kann es sich zum Beispiel um ein leitungsgebundenes Bussystem (z.B. CAN, etc.) oder um ein drahtloses Bussystem (z.B. Ethernet, etc.) handeln. Alternativ kann die Steuervorrichtung 20 auch direkt mit der Druckluftbremsanlage 12 bzw. deren Komponenten verbunden sein oder in die Druckluftbremsanlage 12 integriert sein. Die Steuervorrichtung 20 kann dabei ein oder mehrere Steuergeräte umfassen, die zum Beispiel miteinander vernetzt sind. Zum Beispiel kann die Steuervorrichtung 20 ein Bremssteuergerät für elektronische Bremssysteme (EBS) und eine Luftaufbereitungselektronik (EAC) aufweisen oder in solchen Steuergeräten enthalten sein.

An dem Fahrzeugbus 32 sind ferner optional eine Drahtlos-Kommunikationsschnittstelle 34 zur drahtlosen Kommunikation (z.B. per Funk) mit externen Geräten, eine Eingabevorrichtung 36 und/oder eine Kommunikationsschnittstelle 38 (z.B. USB) zum Anschließen von Geräten angeschlossen.

Zu dem Bremsanlagensystem des Nutzfahrzeugs 10 gehört in diesem Ausführungsbeispiel ferner ein Mobilgerät 22 in Form z.B. eines Smartphones. Das Mobilgerät 22 hat einen Touchscreen, der in üblicher Weise als Eingabevorrichtung 24 und als Anzeigevorrichtung 40 dient. Das Mobilgerät 22 enthält in diesem Ausführungsbeispiel ferner eine Lokalisierungsvorrichtung 26 (z.B. GPS-Sensor) und eine Drahtlos-Kommunikationsschnittstelle 28.

Das Mobilgerät 22 kann über seine Drahtlos-Kommunikationsschnittstelle 28 per Drahtlosverbindung 30, bevorzugt per Funkverbindung (z.B. WLAN, Wifi, Bluetooth, etc.) mit der Steuervorrichtung 20 direkt oder über den Fahrzeugbus 32 mittels der Drahtlos-Kommunikationsschnittstelle 34 des Fahrzeugbusses 32 kommunizieren. Alternativ kann das Mobilgerät 22 auch an die Kommunikationsschnittstelle 38 des Fahrzeugbusses 32 angeschlossen werden, z.B. über ein USB-Kabel.

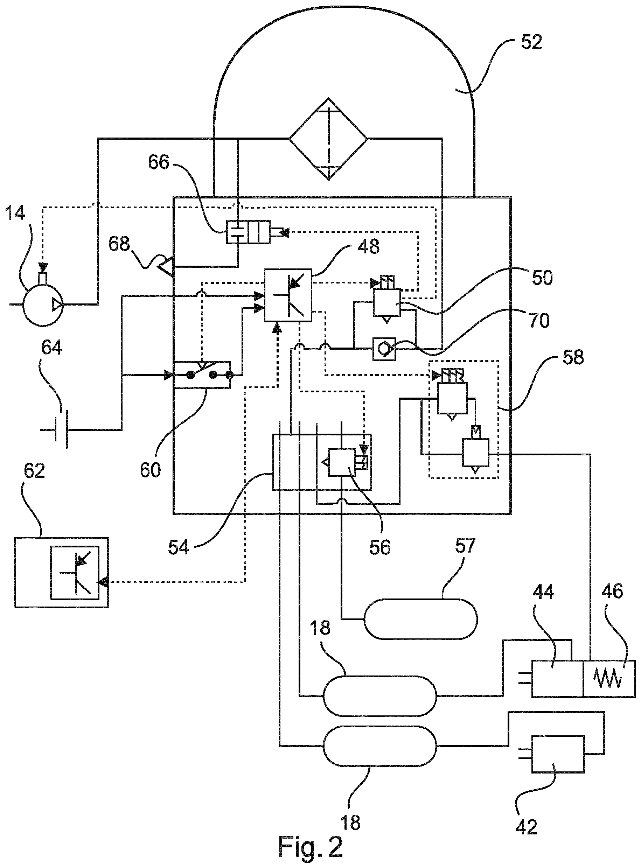

**Fig. 2** zeigt eine detailliertere Darstellung einer Druckluftbremsanlage eines Nutzfahrzeugs, bei welcher die Erfindung in vorteilhafter Weise zum Einsatz kommen kann.

Von der Druckluftbremsanlage werden über die entsprechenden Druckluftspeicher 18 zum Beispiel ein oder mehrere Bremszylinder 42 einer Vorderachse sowie ein oder mehrere Bremszylinder 44 einer Hinterachse angesteuert bzw. betrieben. Außerdem können ein oder mehrere Bremszylinder 46, insbesondere Feststellbremszylinder für eine Parkbremse angesteuert bzw. betrieben werden.

Die Druckluftbremsanlage enthält ein integriertes Steuergerät 48, das mit den verschiedenen Komponenten beispielsweise elektrisch, pneumatisch und/oder über einen CAN-Bus verbunden ist, um die Komponenten anzusteuern und/oder z.B. Betriebszustandssignale von den Komponenten zu empfangen.

Die Druckluftaufbereitungseinrichtung 16 der Druckluftbremsanlage 12 weist insbesondere eine Ventileinrichtung 50 zum Regeln des Anlagendrucks und eine Lufttrocknerpatrone 52 auf. Die Ventileinrichtung 50 steuert auch die Regeneration der Lufttrocknerpatrone 52. Die Lufttrocknerpatrone 52 ist über ein Ablassventil 66 mit einer Entlüftung 68 der Druckluftbremsanlage 12 verbunden.

In der Druckluftbremsanlage 12 ist ferner eine Mehrkreisschutz-Ventileinrichtung 54 vorgesehen. Zwischen der Mehrkreisschutz-Ventileinrichtung 54 und der Lufttrocknerpatrone 52 ist bevorzugt ein Hauptrückschlagventil 70 vorgesehen, um die geförderte Druckluft dauerhaft im Bremssystem zu speichern. In der Mehrkreisschutz-Ventileinrichtung ist in Fig. 2 beispielhaft eine Ventileinrichtung 56 zum elektrisch gesteuerten Absperren oder ggf. Entlüften eines optional vorgesehenen, weiteren Druckluftspeichers 57 für weitere Druckluft-Verbraucherkreise gezeigt. Außerdem sind in dem gezeigten Ausführungsbeispiel eine Ventileinrichtung 58 zum Ansteuern der Parkbremse und ein Wakeup-Schaltung 60 für die Stromversorgung der gesamten Druckluftbremsanlage 12 vorhanden. Die Druckluftbremsanlage 12 ist dabei mit einer Spannungsversorgung 64 verbunden.

Mit dem Steuergerät 48 der Druckluftbremsanlage 12 sind üblicherweise weitere Steuergeräte 62 verbunden. Diese weiteren Steuergeräte 62 sind zum Beispiel einem Antriebsstrang, einer Kupplung, einem Motor, einem Dashboard, einer Luftfederung, einem elektrischen Nachsteller des Lüftspiels, etc. zugeordnet.

Die in Fig. 1 dargestellte Steuervorrichtung 20 des Druckluftbremsanlagensystems ist gemäß der Erfindung derart ausgestaltet, dass sie die Druckluftbremsanlage 12 des Nutzfahrzeugs 10 bereits vor dem Fahrbeginn des Nutzfahrzeugs 10 mittels eines Konditioniervorgangs in einen betriebsbereiten Zustand versetzen kann. Die Steuervorrichtung 20 weist hierzu bevorzugt einen Energiespeicher auf, der die Steuervorrichtung unabhängig von einem Betriebszustand des Fahrzeugmotors mit elektrischer Energie versorgt.

Der von der Steuervorrichtung 20 auslösbare Konditioniervorgang umfasst das Betätigen einer Parkbremse, ferner zum Beispiel ein Befüllen der Druckluftspeicher 18 der Bremsanlage 12 mit Druckluft, ein Regenerieren der Druckluftaufbereitungseinrichtung 16 der Bremsanlage 12 und/oder eine Fehlerdiagnose der Bremsanlage 12. Nach einem solchen Konditioniervorgang befindet sich die Druckluftbremsanlage 12 oder zumindest ein Teil ihrer Komponenten in einem betriebsbereiten Zustand, der ein Fahren des Nutzfahrzeugs 10 erlaubt. Auf diese Weise kann eine Wartezeit nach dem Starten des Fahrzeugmotors bis zum Losfahren des Nutzfahrzeugs 10 vermieden oder zumindest verkürzt werden.

Der Konditioniervorgang kann je nach Anwendungsfall auch das Starten des Fahrzeugmotors enthalten. Das Starten des Fahrzeugmotors erfolgt zum Beispiel zu Beginn oder während eines Konditioniervorgangs, um die anderen Maßnahmen des Konditioniervorgangs durchführen zu können. Der Motor wird dann zum Beispiel zum Abschluss des Konditioniervorgangs wieder abgeschaltet. In anderen Ausführungsformen oder Anwendungsfällen kann der Motor auch zum Abschluss des Konditioniervorgangs gestartet werden oder eingeschaltet bleiben. Dies ist insbesondere von Vorteil, wenn der Fahrer in Kürze mit dem Fahrzeug 10 losfahren will.

Außerdem kann der Konditioniervorgang zum Beispiel das Aufladen einer Batterie des Fahrzeugs 10 umfassen.

In weiteren Ausführungsformen kann der Konditioniervorgang auch das Betätigen einer elektrisch ansteuerbaren Parkbremse enthalten. Zum Beispiel wird zunächst die Parkbremse aktiviert bevor der Motor des Fahrzeugs gestartet wird. In anderen Anwendungsfällen kann die Parkbremse aktiviert werden, falls der Fahrer dies beim Abstellen des Fahrzeugs vergessen hat; dies kann vorzugsweise auch dann erfolgen, falls der Fahrer seinen Fahrzeugschlüssel im Fahrzeug eingeschlossen haben sollte.

Das Auslösen des Konditioniervorgangs wird von einem Benutzer mit Hilfe eines Signalgenerators ausgeführt. Der Signalgenerator erzeugt ein Steuersignal, das an die Steuervorrichtung 20 gesendet wird, sodass diese die Druckluftbremsanlage 12 ansteuert, um den Konditioniervorgang auszulösen. Bei dem Steuersignal handelt es sich zum Beispiel um ein Triggersignal zum sofortigen Auslösen des Konditioniervorgangs oder um ein Zeitsignal zum zeitverzögerten Auslösen des Konditioniervorgangs zu einer vorbestimmten Uhrzeit oder nach Ablauf einer vorbestimmten Zeitdauer.

In einer Ausführungsform der Erfindung weist der Signalgenerator die Eingabevorrichtung 24 des Mobilgeräts 22 auf. Der Benutzer kann dann über diese Eingabevorrichtung, zum Beispiel mittels einer geeigneten App, einen Steuerbefehl eingeben, der einem Zeitsignal zum Auslösen des Konditioniervorgangs entspricht. Die Übertragung dieses Zeitsignals erfolgt beispielsweise über die Funkverbindung 30 drahtlos an die Steuervorrichtung 20.

In einer anderen Ausführungsform der Erfindung weist der Signalgenerator die Lokalisierungsvorrichtung 26 des Mobilgeräts 22 auf. Nähert sich der Benutzer dem Fahrzeug, so erzeugt der Signalgenerator automatisch ein Triggersignal zum sofortigen Auslösen oder ein Zeitsignal zum zeitversetzten Auslösen des Konditioniervorgangs. Die Übertragung dieses Triggersignals oder Zeitsignals erfolgt beispielsweise ebenfalls über die Funkverbindung 30 drahtlos an die Steuervorrichtung 20.

In einer anderen Ausführungsform der Erfindung bildet ein Fahrzeugschlüssel mit einem Transponder das Mobilgerät 22. Der Signalgenerator weist dann diesen Transponder auf. Nähert sich der Benutzer dem Fahrzeug, so reagiert der Transponder automatisch auf ein Anfragesignal des Nutzfahrzeugs und erzeugt automatisch ein Triggersignal zum sofortigen Auslösen oder ein Zeitsignal zum zeitversetzten Auslösen des Konditioniervorgangs.

In einer anderen Ausführungsform der Erfindung bildet ein Telefon oder Mobiltelefon das Mobilgerät 22. Der Der Signalgenerator weist dann die Eingabevorrichtung dieses (Mobil-)Telefons auf. Der Benutzer kann dann über diese Eingabevorrichtung (z.B. als SMS) einen Steuerbefehl eingeben, der einem Zeitsignal zum Auslösen des Konditioniervorgangs entspricht. Die Übertragung dieses Zeitsignals erfolgt dann zum Beispiel über ein Telekommunikationsnetz an die Steuervorrichtung 20.

Die Durchführung eines Konditioniervorgangs der Bremsanlage vor einem Fahrbeginn des Fahrzeugs kann zum Beispiel folgendermaßen ablaufen.

Der Ruhestrom der Steuergeräte der Steuervorrichtung 20 ist typischerweise möglichst niedrig, damit sich die Batterien im Parkzustand des Fahrzeugs nicht zu schnell entleeren. Nach einem Auslösen des Konditioniervorgangs durch ein Steuersignal gemäß einer der oben beschriebenen Varianten, wird die Stromversorgung der für den Konditioniervorgang notwendigen Komponenten zugeschaltet, d.h. insbesondere auch für nicht-stromsparende Teile der Elektroniken und für elektrische Aktuatoren. Dies erfolgt zum Beispiel mit Hilfe der Wakeup-Schaltung 60. Ggf. werden auch andere Steuergeräte und Komponenten, die für den Konditioniervorgang benötigt werden, aufgeweckt oder direkt mit Strom versorgt.

Nach dem Ausführen des eigentlichen Konditioniervorgangs können die nicht mehr benötigten und unnötig Strom verbrauchenden Komponenten wieder abgeschaltet werden. Dies gilt insbesondere für die viel Energie verbrauchenden Komponenten und für den Fall, dass der Fahrer nicht unmittelbar nach dem Konditioniervorgang mit dem Fahrzeug losfahren will.

Das Ergebnis bzw. das Ende des Konditioniervorgangs kann dem Fahrer des Fahrzeugs optional mitgeteilt werden. Dies kann zum Beispiel über die Anzeigevorrichtung 40 des Mobilgeräts 40 oder über eine Anzeigevorrichtung im Fahrzeug geschehen.

Der Konditioniervorgang, der vor dem Fahrbeginn des Fahrzeugs durchgeführt wird, kann eine oder mehrere Maßnahmen umfassen. Hierzu zählen zum Beispiel das Befüllen wenigstens eines Druckluftspeichers 18 der Bremsanlage mit Druckluft; das Regenerieren der Druckluftaufbereitungseinrichtung 16 der Bremsanlage, d.h. zum Beispiel wenigstens einer Lufttrocknerpatrone 52 und/oder wenigstens eines Luftfilters; das Aufladen einer Batterie; das selektive Befüllen von Luftverbraucherkreisen, die mit der Bremsanlage verbunden sind; das Betätigen der Parkbremse; das Starten des Fahrzeugmotors; das Abschalten von energieverbrauchenden Komponenten; das Anheben einer Luftfederung auf ein vorbestimmtes Niveau; das Optimieren einer Lüftspieleinstellung zwischen Bremsbelägen und Bremsscheiben und dergleichen.

Beim Befüllen eines Druckluftspeichers mit Druckluft wird zum Beispiel in einem ersten Schritt in Abhängigkeit von dem Steuersignal die Stromversorgung der Luftaufbereitung und anderer benötigter Steuergeräte aktiviert. Der Kompressor 14 und die Druckluftaufbereitung 16 werden in den Fördermodus geschaltet. Dann werden der Systemdruck und/oder die Drücke in den Verbraucherkreisen erfasst. Je nach Ausführungsform kann ggf. die bis zum gewünschten Fahrbeginn des Fahrzeugs verbleibende Zeit bestimmt werden, um die Art und die Dauer der Befüllung darauf abzustimmen. Beim Erreichen der gewünschten Solldrücke in den verschiedenen Verbraucherkreisen wird die Kompressorförderung wieder abgeschaltet. Je nach Ausführungsform kann im Anschluss optional die Lufttrocknerpatrone 52 der Druckluftaufbereitungseinrichtung 16 regeneriert werden.

Beim Regenerieren der Lufttrocknerpatrone 52 wird zum Beispiel in einem ersten Schritt durch das Steuersignal die Stromversorgung der Luftaufbereitungselektronik zum Ansteuern von Ventileinrichtungen aufgeweckt. Optional kann zunächst die Bremsanlage mit Druckluft befüllt werden, um das regenerieren bei Maximaldruck durchzuführen. Es werden dann entsprechende Magnetventile so geschaltet, dass die trockene Druckluft aus einem Druckluftspeicher 18 zurück durch die Lufttrocknerpatrone 52 geleitet wird. Der Kompressor 14 ist dabei ausgeschaltet. Falls nach dem Regenerieren der Lufttrocknerpatrone 52 noch ausreichend Zeit bis zum Starten des Fahrzeugs verbleibt, kann ggf. die Bremsanlage wieder mit Druckluft befüllt werden.

Falls für das Losfahren des Fahrzeugs nicht alle Verbraucherkreise mit Druckluft gefüllt sein müssen und/oder das Druckniveau nicht maximal sein muss, kann auch ein selektives Befüllen vorgenommen werden. In diesem Fall können über elektrisch gesteuerte oder elektrisch gesteuerte Ventileinrichtungen 56 der Mehrkreisschutz-Ventileinrichtung 54 einzelne Verbraucherkreise frühzeitig wieder geschlossen werden, um eine mögliche Losfahrzeit des Fahrzeugs früher zu erreichen. Über die Kompressorsteuerung und das Ablassventil der Luftaufbereitungselektronik kann das Druckniveau in der Bremsanlage vor dem Losfahren zum Beispiel je nach den geplanten Betriebszuständen variabel eingestellt werden.

Zum Aufladen der Batterie wird zunächst das Getriebe in den Leerlauf geschaltet, falls es sich noch nicht im Leerlauf befinden sollte. Dann wird die elektrische Parkbremse aktiviert. Diese Funktion ist häufig in der Luftaufbereitungselektronik integriert. Dann kann der Motor gestartet werden, ggf. mit erhöhter Motordrehzahl.

Wenn der Konditioniervorgang auch eine Fehlerdiagnose der Druckluftbremsanlage 12 umfasst, kann die Steuervorrichtung 20 das entsprechende Fehlerdiagnoseergebnis vorzugsweise an einer Anzeigevorrichtung 40 ausgeben, zum Beispiel auf dem Touchscreen des Smartphones, der auch als Eingabevorrichtung 24 für den Steuerbefehl zum Auslösen des Konditioniervorgangs benutzt wird.

Um ein unbeabsichtigtes oder unbefugtes Auslösen eines Konditioniervorgangs zu verhindern, weist das Druckluftbremsanlagensystem bevorzugt ferner ein Authentifizierungssystem auf. Hierzu weist der Signalgenerator eine Authentifizierungsvorrichtung auf oder ist mit einer solchen verbunden, welche ein Authentifizierungssignal erzeugt, das ebenfalls an die Steuervorrichtung 20 gesendet wird. Die Steuervorrichtung 20 verifiziert das empfangene Authentifizierungssignal und löst den Konditioniervorgang der Druckluftbremsanlage 12 nur aus, wenn ein Authentifizierungssignal eines berechtigten Benutzers, Mobilgeräts, etc. empfangen worden ist.

Bei dem Authentifizierungssignal handelt es sich beispielsweise um ein separates Signal, das zusätzlich zum Steuersignal erzeugt und gesendet wird. Alternativ handelt es sich bei dem Authentifizierungssignal um eine Codierung des Steuersignals selbst, zum Beispiel durch einen Authentifizierungsschlüssel im Header des Steuersignals oder eine Verschlüsselung des Steuersignals.

### BEZUGSZEICHENLISTE

- 10: Fahrzeug, insbes. Nutzfahrzeug
- 12: Druckluftanlage, insbes. Druckluftbremsanlage
- 14: Kompressor
- 16: Druckluftaufbereitungseinrichtung
- 18: Druckluftspeicher
- 20: Steuervorrichtung
- 22: Mobilgerät
- 24: Eingabevorrichtung
- 26: Lokalisierungsvorrichtung
- 28: Drahtlos-Kommunikationsschnittstelle
- 30: Drahtlosverbindung
- 32: Fahrzeugbus
- 34: Drahtlos-Kommunikationsschnittstelle
- 36: Eingabevorrichtung
- 38: Kommunikationsschnittstelle
- 40: Anzeigevorrichtung
- 42: Bremszylinder Vorderachse
- 44: Bremszylinder Hinterachse
- 46: Bremszylinder Parkbremse
- 48: Steuergerät
- 50: Ventileinrichtung
- 52: Lufttrocknerpatrone
- 54: Mehrkreisschutz-Ventileinrichtung
- 56: Ventileinrichtung
- 57: weiterer Druckluftspeicher
- 58: Ventileinrichtung
- 60: Wakeup-Schaltung
- 62: Steuergeräte
- 64: Spannungsversorgung
- 66: Ablassventil
- 68: Entlüftung
- 70: Hauptrückschlagventil

## Patentansprüche

1. Druckluftanlagensystem für ein Fahrzeug (10), insbesondere für ein Nutzfahrzeug, aufweisend:
eine Druckluftanlage (12); und
eine Steuervorrichtung (20) zum Steuern der Druckluftanlage (12), die ausgestaltet ist, um einen Konditioniervorgang auszuführen, mit dem die Druckluftanlage (12) vor einem Fahrbeginn des Fahrzeugs (10) in einen betriebsbereiten Zustand versetzt wird,
**dadurch gekennzeichnet, dass**
die Steuervorrichtung (20) in eine Steuerelektronik einer Druckluftaufbereitungseinrichtung (16) der Druckluftanlage (12) integriert ist, und der Konditioniervorgang das Betätigen einer Parkbremse umfasst.

2. Druckluftanlagensystem nach Anspruch 1, bei welchem
ferner ein Signalgenerator vorgesehen ist, der bei Vorliegen einer bestimmten Bedingung ein Steuersignal zum Auslösen des Konditioniervorgangs erzeugt.

3. Druckluftanlagensystem nach Anspruch 2, bei welchem
das Steuersignal ein Triggersignal zum sofortigen Auslösen des Konditioniervorgangs oder ein Zeitsignal zum Auslösen des Konditioniervorgangs zu einem gewünschten Zeitpunkt in der Zukunft ist.

4. Druckluftanlagensystem nach Anspruch 2 oder 3, bei welchem
der Signalgenerator derart ausgestaltet ist, dass er das Steuersignal in Abhängigkeit von einer Bedienung durch einen Benutzer erzeugt.

5. Druckluftanlagensystem nach einem der Ansprüche 2 bis 4, bei welchem
der Signalgenerator separat von der Steuervorrichtung (20) vorgesehen ist und das erzeugte Steuersignal an die Steuervorrichtung (20) sendet.

6. Druckluftanlagensystem nach Anspruch 5, bei welchem
der Signalgenerator in ein Mobilgerät (22) integriert ist oder mit einem Mobilgerät (22) verbunden ist.

7. Druckluftanlagensystem nach Anspruch 6, bei welchem
das Mobilgerät (22) über eine Drahtlosverbindung (30) oder ein Telekommunikationsnetz mit der Steuervorrichtung (20) oder mit einem Fahrzeugbus (32), an den die Steuervorrichtung (20) angeschlossen ist, verbindbar ist.

8. Druckluftanlagensystem nach Anspruch 6 oder 7, bei welchem
der Signalgenerator eine Eingabevorrichtung (24) zum Eingeben eines Steuerbefehls entsprechend dem zu erzeugenden Steuersignal durch einen Benutzer und/ oder eine Lokalisierungsvorrichtung (26) zum Ermitteln einer Position des Mobilgeräts (22) und automatischen Erzeugen des Steuersignals entsprechend der ermittelten Position aufweist.

9. Druckluftanlagensystem nach Anspruch 6, bei welchem
das Mobilgerät (22) an eine Kommunikationsschnittstelle (38) eines Fahrzeugbusses (32), an den die Steuervorrichtung (20) angeschlossen ist, anschließbar ist.

10. Druckluftanlagensystem nach einem der Ansprüche 4 bis 9, bei welchem
der Signalgenerator eine Eingabevorrichtung (36) aufweist, die in dem Fahrzeug (10) installiert ist.

11. Druckluftanlagensystem nach einem der Ansprüche 2 bis 4, bei welchem
der Signalgenerator in die Steuervorrichtung (20) integriert ist.

12. Druckluftanlagensystem nach einem der Ansprüche 2 bis 11, bei welchem
der Signalgenerator eine Authentifizierungsvorrichtung aufweist oder mit einer Authentifizierungsvorrichtung verbunden ist, wobei die Authentifizierungsvorrichtung ausgestaltet ist, um ein Authentifizierungssignal zu erzeugen, das an die Steuervorrichtung (20) gesendet wird.

13. Druckluftanlagensystem nach einem der vorhergehenden Ansprüche, bei welchem
der Konditioniervorgang wenigstens eine Maßnahme umfasst, die ausgewählt ist aus:
Befüllen wenigstens eines Druckluftspeichers (18, 57) der Druckluftanlage (12) mit Druckluft;
Regenerieren einer Druckluftaufbereitungseinrichtung (16) der Druckluftanlage (12);
Aufladen einer Batterie;
selektives Befüllen von Luftverbraucherkreisen, die mit der Druckluftanlage verbunden sind;
Starten eines Motors des Fahrzeugs (10);
Abschalten von energieverbrauchenden Komponenten;
Anheben einer Luftfederung auf ein vorbestimmtes Niveau; und
Optimieren einer Lüftspieleinstellung zwischen Bremsbelägen und Bremsscheiben.

14. Druckluftanlagensystem nach einem der vorhergehenden Ansprüche, bei welchem
der Konditioniervorgang eine Fehlerdiagnose der Druckluftanlage (12) umfasst und die Steuervorrichtung (20) ausgestaltet ist, ein Fehlerdiagnoseergebnis an eine Anzeigevorrichtung (40) für einen Benutzer auszugeben.

15. Druckluftanlagensystem nach einem der vorhergehenden Ansprüche, bei welchem
die Steuervorrichtung (20) eine Steuerelektronik einer Druckluftaufbereitungseinrichtung (16) der Druckluftanlage (12) ist.

16. Fahrzeug, insbesondere Nutzfahrzeug, mit einem Druckluftanlagensystem nach einem der vorhergehenden Ansprüche.

17. Verfahren zum Betreiben einer Druckluftanlage (12) eines Fahrzeugs (10), insbesondere eines Nutzfahrzeugs, bei welchem die Druckluftanlage (12) vor einem Fahrbeginn des Fahrzeugs (10) mittels eines Konditioniervorgangs in einen betriebsbereiten Zustand versetzt wird, **dadurch gekennzeichnet, dass**
der Konditioniervorgang von einer Steuervorrichtung (20) zum Steuern der Druckluftanlage (12), wobei die Steuervorrichtung (20) in eine Steuerelektronik einer Druckluftaufbereitungseinrichtung (16) der Druckluftanlage (12) integriert ist, ausgelöst wird, und der Konditioniervorgang das Betätigen einer Parkbremse umfasst.

18. Verfahren nach Anspruch 17, bei welchem
der Konditioniervorgang durch ein Steuersignal ausgelöst wird, das bei Vorliegen einer bestimmten Bedingung erzeugt wird.

19. Verfahren nach Anspruch 18, bei welchem
das Steuersignal ein Triggersignal zum sofortigen Auslösen des Konditioniervorgangs oder ein Zeitsignal zum Auslösen des Konditioniervorgangs zu einem gewünschten Zeitpunkt in der Zukunft ist.

20. Verfahren nach Anspruch 18 oder 19, bei welchem
das Steuersignal durch einen Benutzer erzeugt wird.

21. Verfahren nach Anspruch 20, bei welchem
das Steuersignal von einem Benutzer über ein Mobilgerät (22) oder eine in dem Fahrzeug (10) installierte Eingabevorrichtung (36) erzeugt wird.

22. Verfahren nach einem der Ansprüche 17 bis 21, bei welchem
ein Auslösen des Konditioniervorgangs mittels eines Authentifizierungssignals authentifiziert wird.

23. Verfahren nach einem der Ansprüche 17 bis 22, bei welchem
der Konditioniervorgang wenigstens eine Maßnahme umfasst, die ausgewählt ist aus
Befüllen wenigstens eines Druckluftspeichers (18, 57) der Druckluftanlage (12) mit Druckluft;
Regenerieren einer Druckluftaufbereitungseinrichtung (16) der Druckluftanlage (12);
Aufladen einer Batterie;
selektives Befüllen von Luftverbraucherkreisen, die mit der Druckluftanlage verbunden sind;
Starten eines Motors des Fahrzeugs (10);
Abschalten von energieverbrauchenden Komponenten;
Anheben einer Luftfederung auf ein vorbestimmtes Niveau; und
Optimieren einer Lüftspieleinstellung zwischen Bremsbelägen und Bremsscheiben.

24. Verfahren nach einem der Ansprüche 17 bis 23, bei welchem
der Konditioniervorgang eine Fehlerdiagnose der Druckluftanlage (12) umfasst und das Fehlerdiagnoseergebnis an einen Benutzer ausgegeben wird.

## Claims

1. Compressed-air system for a vehicle (10), in particular for a utility vehicle, comprising:
a compressed-air unit (12); and
a control device (20) for controlling the compressed-air unit (12), which device is designed to carry out a conditioning process by means of which the compressed-air unit (12) is brought to an operationally ready condition before the driving of the vehicle (10) begins,
**characterised in that**
the control device (20) is integrated in a control electronic system of a compressed-air preparation device (16) of the compressed-air unit (12), and the conditioning process comprises the actuation of a parking brake.

2. Compressed-air system according to Claim 1, in which
in addition a signal generator is provided, which, when a particular condition exists, produces a control signal for initiating the conditioning process.

3. Compressed-air system according to Claim 2, in which
the control signal is a triggering signal for the immediate initiation of the conditioning process or a time signal for initiating the conditioning process at a desired future time.

4. Compressed-air system according to Claims 2 or 3, in which
the signal generator is designed in such manner that it produces the control signal as the result of an action by a user.

5. Compressed-air system according to any of Claims 2 to 4, in which
the signal generator is provided separately from the control device (20) and transmits the control signal produced to the control device (20).

6. Compressed-air system according to Claim 5, in which
the signal generator is integrated in a mobile unit (22) or connected to a mobile unit (22).

7. Compressed-air system according to Claim 6, in which
the mobile unit (22) can be connected by a wireless connection (30) or by a telecommunication network to the control device (20) or to a vehicle bus (32) to which the control device (20) is connected.

8. Compressed-air system according to Claims 6 or 7, in which
the signal generator comprises an input device (24) for the input by a user of a control command that corresponds to the control signal to be produced and/or a position-finding device (26) for determining a position of the mobile unit (22) and for the automatic production of the control signal in accordance with the position determined.

9. Compressed-air system according to Claim 8, in which
the mobile unit (22) can be connected to a communication interface (38) of a vehicle bus (32) to which the control device (20) is connected.

10. Compressed-air system according to any of Claims 4 to 9, in which
the signal generator comprises an input device (36) which is installed in the vehicle (10).

11. Compressed-air system according to any of Claims 2 to 4, in which
the signal generator is integrated in the control device (20).

12. Compressed-air system according to any of Claims 2 to 11, in which
the signal generator comprises an authentication device or is connected to an authentication device, the authentication device being designed to produce an authentication signal which is sent to the control device (20).

13. Compressed-air system according to any of the preceding claims, in which
the conditioning process comprises at least one measure which is selected from:
filling of at least one compressed-air reservoir (18, 57) of the compressed-air unit (12) with compressed-air;
regenerating a compressed-air preparation device (16) of the compressed-air unit (12);
charging a battery;
selective filling of air consumer circuits which are connected to the compressed-air system;
starting an engine of the vehicle (10);
switching off energy-consuming components;
raising an air suspension system to a predetermined level; and
optimising an air-gap adjustment between the brake pads and the brake discs.

14. Compressed-air system according to any of the preceding claims, in which
the conditioning process includes a fault diagnosis of the compressed-air unit (12), and the control device (20) is equipped to emit a fault diagnosis result to a display device (40) for a user.

15. Compressed-air system according to any of the preceding claims, in which
the control device (20) is a control electronics system of a compressed-air preparation device (16) of the compressed-air unit (12).

16. Vehicle, in particular a utility vehicle, with a compressed-air system according to any of the preceding claims.

17. Method for operating a compressed-air system (12) of a vehicle (10), in particular a utility vehicle, in which before the vehicle (10) begins driving the compressed-air unit (12) is brought by a conditioning process to an operationally ready condition, **characterised in that**
the conditioning process is initiated by a control device (20) for controlling the compressed-air unit (12), wherein the control device (20) is integrated in a control electronics system of a compressed-air preparation device (16) of the compressed-air unit (12), and the conditioning process comprises the actuation of a parking brake.

18. Method according to Claim 17, in which
the conditioning process is initiated by a control signal, which is produced when a particular condition exists.

19. Method according to Claim 18, in which
the control signal is a triggering signal for the immediate initiation of the conditioning process or a time signal for initiating the conditioning process at a desired future time.

20. Method according to Claims 18 or 19, in which
the control signal is produced by a user.

21. Method according to Claim 20, in which
the control signal is produced by a user by means of a mobile unit (22) or an input device (36) installed in the vehicle (10).

22. Method according to any of Claims 17 to 21, in which
an initiation of the conditioning process is authenticated by an authentication signal.

23. Method according to any of Claims 17 to 22, in which
the conditioning process comprises at least one measure selected from:
filling of at least one compressed-air reservoir (18, 57) of the compressed-air unit (12) with compressed-air;
regenerating a compressed-air preparation device (16) of the compressed-air unit (12);
charging a battery;
selective filling of air consumer circuits connected to the compressed-air system;
starting an engine of the vehicle (10);
switching off energy-consuming components;
raising an air suspension system to a predetermined level; and
optimising an air-gap adjustment between the brake pads and the brake discs.

24. Method according to any of Claims 17 to 23, in which
the conditioning process includes a fault diagnosis of the compressed-air unit (12), and the fault diagnosis result is communicated to a user.

## Revendications

1. Système à installation d'air comprimé d'un véhicule (10), notamment d'un véhicule utilitaire, comportant :
une installation (12) d'air comprimé ; et
un dispositif (20) de commande pour commander l'installation (12) d'air comprimé, qui est conformée pour effectuer une opération de conditionnement, par laquelle l'installation (12) d'air comprimé est mise, avant un début de course du véhicule (10), dans un état prêt à fonctionner,
**caractérisé en ce que**
le dispositif (20) de commande est intégré à une électronique de commande d'un dispositif (16) de traitement d'air comprimé de l'installation (12) d'air comprimé et l'opération de conditionnement comprend l'actionnement d'un frein de stationnement.

2. Système à installation d'air comprimé suivant la revendication 1, dans lequel
il est prévu en outre un générateur de signal, qui en présence d'une condition déterminée produit un signal de déclenchement de l'opération de conditionnement.

3. Système à installation d'air comprimé suivant la revendication 2, dans lequel
le signal de commande est un signal de déclenchement pour le déclenchement immédiat de l'opération de conditionnement ou un signal temporisé pour le déclenchement de l'opération de conditionnement à un instant souhaité dans l'avenir.

4. Système à installation d'air comprimé suivant la revendication 2 ou 3, dans lequel
le générateur de signal est conformé de manière à produire le signal de commande en fonction d'une instruction par un utilisateur.

5. Système à installation d'air comprimé suivant l'une des revendications 2 à 4, dans lequel
le générateur de signal est prévu séparément du dispositif (20) de commande, et envoie le signal de commande produit au dispositif (20) de commande.

6. Système à installation d'air comprimé suivant la revendication 5, dans lequel
le générateur de signal est intégré à un appareil (22) mobile où est relié un appareil (22) mobile.

7. Système à installation d'air comprimé suivant la revendication 6, dans lequel
l'appareil (22) mobile peut être relié par l'intermédiaire d'une liaison (30) sans fil ou d'un réseau de télécommunication au dispositif (20) de commande ou à un bus (32) de véhicule, auquel le dispositif (20) de commande est raccordé.

8. Système à installation d'air comprimé suivant la revendication 6 ou 7, dans lequel
le générateur de signal a un dispositif (24) d'entrée, pour l'entrée d'une instruction de commande correspondant au signal de commande à produire par un utilisateur et/ou un dispositif (26) de localisation, pour la détermination d'une position de l'appareil (22) mobile et la production automatiquement du signal de commande correspondant à la position déterminée.

9. Système à installation d'air comprimé suivant la revendication 6, dans lequel
l'appareil (22) mobile peut être raccordé à une interface (38) de communication d'un bus (32) du véhicule, auquel le dispositif (20) de commande est raccordé.

10. Système à installation d'air comprimé suivant l'une des revendications 4 à 9, dans lequel
le générateur de signal a un dispositif (36) d'entrée, qui est monté dans le véhicule (10).

11. Système à installation d'air comprimé suivant l'une des revendications 2 à 4, dans lequel
le générateur de signal est intégré au dispositif (20) de commande.

12. Système à installation d'air comprimé suivant l'une des revendications 2 à 11, dans lequel
le générateur de signal a un dispositif d'authentification ou est relié à un dispositif d'authentification, le dispositif d'authentification étant conformé pour produire une signal d'authentification, qui est envoyé au dispositif (20) de commande.

13. Système à installation d'air comprimé suivant l'une des revendications précédentes, dans lequel
l'opération de conditionnement comprend une mesure, qui est choisie parmi :
remplir d'air comprimé au moins un réservoir (18,57) d'air comprimé de l'installation (12) d'air comprimé ;
régénérer un dispositif (16) de traitement de l'air comprimé de l'installation (12) d'air comprimé ;
charger une batterie ;
remplir sélectivement des circuits consommateurs d'air, qui sont reliés à l'installation d'air comprimé ;
faire démarrer un moteur du véhicule, (10) ;
arrêter des éléments consommant de l'énergie ;
soulever une suspension pneumatique à un niveau déterminé à l'avance, et
optimiser le réglage d'un jeu de garniture entre des garnitures de frein et des disques de frein.

14. Système à installation d'air comprimé suivant l'une des revendications précédentes, dans lequel
l'opération de conditionnement comprend un diagnostic de défaut de l'installation (12) d'air comprimé et le dispositif (20) de commande est conformé pour envoyer un résultat du diagnostic de défaut à un dispositif (40) d'affichage pour un utilisateur.

15. Système à installation d'air comprimé suivant l'une des revendications précédentes, dans lequel
le dispositif (20) de commande est une électronique de commande d'un dispositif (16) de traitement de l'air comprimé de l'installation (12) d'air comprimé.

16. Véhicule, notamment véhicule utilitaire, ayant un système à installation d'air comprimé suivant l'une des revendications précédentes.

17. Procédé pour faire fonctionner une installation (12) d'air comprimé d'un véhicule (10), notamment d'un véhicule utilitaire, dans lequel on met l'installation (12) d'air comprimé, avant le début d'une course du véhicule (10), au moyen, d'une opération de conditionnement, dans un état prêt à fonctionner, **caractérisé en ce que**
on déclenche l'opération de conditionnement par un dispositif (20) de commande de l'installation (12) d'air comprimé, le dispositif (20) de commande étant intégré à une électronique de commande d'un dispositif (16) de traitement de l'air comprimé de l'installation (12) d'air comprimé et l'opération de conditionnement comprend l'actionnement d'un frein de stationnement.

18. Procédé suivant la revendication 17, dans lequel
on déclenche l'opération de conditionnement par un signal de commande, qui est produit en présence d'une condition déterminée.

19. Procédé suivant la revendication 18, dans lequel
le signal de commande est un signal de déclenchement pour le déclenchement immédiat de l'opération de conditionnement ou un signal temporisé pour le déclenchement de l'opération de conditionnement à un instant souhaité dans l'avenir.

20. Procédé suivant la revendication 18 ou 19, dans lequel
on produit le signal de commande par un utilisateur.

21. Procédé suivant la revendication 20, dans lequel
on produit le signal de commande par un utilisateur par l'intermédiaire d'un appareil (22) mobile ou par l'intermédiaire d'un dispositif (36) d'entrée, monté dans le véhicule (10).

22. Procédé suivant l'une des revendications 17 à 21, dans lequel
on authentifie un déclenchement de l'opération de conditionnement au moyen d'un signal d'authentification.

23. Procédé suivant l'une des revendications 17 à 22, dans lequel
l'opération de conditionnement comprend au moins une mesure qui est choisie parmi :
remplir d'air comprimé au moins un réservoir (18,57) d'air comprimé de l'installation (12) d'air comprimé ;
régénérer un dispositif (16) de traitement de l'air comprimé de l'installation (12) d'air comprimé ;
charger une batterie ;
remplir sélectivement des circuits consommateurs d'air, qui sont reliés à l'installation d'air comprimé ;
faire démarrer un moteur du véhicule (10);
arrêter des éléments consommant de l'énergie ;
soulever une suspension pneumatique à un niveau déterminé à l'avance ; et
optimiser le réglage d'un jeu de garniture entre des garnitures de frein et des disques de frein.

24. Procédé suivant l'une des revendications 17 à 23, dans lequel
l'opération de conditionnement comprend un diagnostic de défaut de l'installation (12) d'air comprimé et on envoie le résultat du diagnostic du défaut à un utilisateur.
